# EUROPEAN PATENT APPLICATION

(11) **EP 4 159 510 A1**
(43) Date of publication of application: **05.04.2023**
(21) Application number: 21817048.8
(22) Date of filing: 28.05.2021
(51) Int. Cl.: B60K 7/00, H02J 13/00, B60K 1/04, G06Q 50/06, H02J 7/00, B60L 50/60, B60L 58/10, B60L 53/00, B60L 53/68, H01M 50/20

(54) **MOBILE BATTERY, INFORMATION PROCESSING DEVICE, INFORMATION PROCESSING SYSTEM, INFORMATION PROCESSING METHOD, PROGRAM, AND RECORDING MEDIUM**

(30) Priority: 02.06.2020 JP 2020095844; 16.06.2020 JP 2020103652
(71) Applicant: 3DOM ALLIANCE INC., Tokyo 107-0052 (JP)
(72) Inventor: MATSUMURA Akihiko, Yokohama-shi, Kanagawa 221-0022 (JP); HARADA Masako, Yokohama-shi, Kanagawa 221-0022 (JP); SATSUKAWA Seiji, Yokohama-shi, Kanagawa 221-0022 (JP); ARIKAWA Tomoaki, Yokohama-shi, Kanagawa 221-0022 (JP)
(74) Representative: Winter, Brandl - Partnerschaft mbB
(86) International application number: PCT/JP2021/020316
(87) International publication number: WO 2021/246298

(57) **Abstract**

[Problem] To provide a mobile battery that is easy to transport. [Solution] According to an aspect of the present invention, a mobile battery is provided. This mobile battery comprises a battery body, a movement unit, and a motor. The battery body is configured to be chargeable and dischargeable, or replaceable. The movement unit is connected to the motor and is configured to be able to move the battery body. The motor generates motive power with electrical power supplied from the battery body. The present mobile battery is configured to be self-propelled with the motive power, or to move using the motive power as auxiliary motive power for transportation.

## Description

### TECHNICAL FIELD

The present invention relates to a mobile battery, an information processing apparatus, an information processing system, an information processing method, a program and a storage medium.

### RELATED ART

Patent document 1 discloses a storage battery designed to ensure more reliable safety even when a large storage battery system is constructed.

### PRIOR ART DOCUMENTS

### Patent Document

[Patent Document 1] JP 2019/71783 A

### SUMMARY OF INVENTION

### Problems to be Solved by Invention

While a large storage battery can store a large amount of energy, the large size makes it heavy and inconvenient to be moved manually.

In view of the above circumstances, the present invention provides a mobile battery that can be easily transported.

### Means for Solving Problems

According to an aspect of the present invention, a mobile battery is provided. The mobile battery comprises a battery body, a moving unit, and a motor. The battery body is configured to be chargeable, dischargeable, or replaceable. The moving unit is connected to the motor and is configured to move the battery body. The motor is configured to generate power by electric power supplied from the battery body. The mobile battery is configured to be self-propelled by the power or to move using the power as auxiliary power for transportation.

Such a mobile battery facilitates transportation.

### BRIEF DESCRIPTION OF DRAWINGS

FIG. 1 is a perspective view of a mobile battery 100 according to a first embodiment.
FIG. 2 is a functional block diagram of the mobile battery 100.
FIG. 3 is a block diagram for illustrating various functions of a controller 10.
FIG. 4 is a functional block diagram of a mobile battery 100 according to a first variation of the first embodiment.
FIG. 5 is a functional block diagram of a mobile battery 100 according to a second variation of the first embodiment.
FIG. 6 is a functional block diagram of a mobile battery 100 according to a third variation of the first embodiment.
FIG. 7 is a functional block diagram of a mobile battery 100 according to a fourth variation of the first embodiment.
FIG. 8 is a functional block diagram of a mobile battery 100 according to a second embodiment.
FIG. 9 is a functional block diagram of a mobile battery 100 according to a first variation of the second embodiment.
FIG. 10 is a functional block diagram of a mobile battery 100 according to a second variation of the second embodiment.
FIG. 11 is a functional block diagram of a mobile battery 100 according to a third variation of the second embodiment.
FIG. 12 is a diagram showing an example of a system configuration of an information processing system according a third embodiment.
FIG. 13 is a diagram showing an example of a hardware configuration of a server apparatus according the third embodiment.
FIG. 14 is a diagram showing an example of a hardware configuration of a mobile battery according to the third embodiment.
FIG. 15 is a diagram showing an example of a functional configuration of the server apparatus according to the third embodiment.
FIG. 16 is a diagram showing an example of data that the mobile battery periodically transmits to the server apparatus according to the third embodiment.
FIG. 17 is a diagram showing an example of discharge information according to the third embodiment.
FIG. 18 is a diagram showing an example of charge information according to the third embodiment.
FIG. 19 is a flowchart showing an example of information processing in the server apparatus according to the third embodiment.
FIG. 20 is a diagram showing an example of a functional configuration of a mobile battery according to a first variation of the third embodiment.
FIG. 21 is a diagram showing an example of charge information according to the third embodiment.
FIG. 22 is a flowchart showing an example of information processing in a server apparatus according to the first variation of the third embodiment.
FIG. 23 is a flowchart showing an example of information processing in a server apparatus according to a second variation of the third embodiment.
FIG. 24 is a diagram showing an example of a functional configuration of a mobile battery according to a third variation of the third embodiment.
FIG. 25 is a diagram showing an example of a functional configuration of a mobile battery according to a fifth variation of the third embodiment.
FIG. 26 is a diagram showing an example of a functional configuration of a mobile battery according to a sixth variation of the third embodiment.
FIG. 27 is a flowchart showing an example of information processing in a server apparatus according to the sixth variation of the third embodiment.
FIG. 28 is a diagram showing an example of a functional configuration of the mobile battery according to the fifth variation of the third embodiment.
FIG. 29 is a diagram showing an example of a functional configuration of the mobile battery according to the sixth variation of the third embodiment.
FIG. 30 is a flowchart showing an example of information processing of the mobile battery according to the sixth variation of the third embodiment.
FIG. 31 is a flowchart showing an example of information processing of a mobile battery according to a seventh variation of the third embodiment.

### DESCRIPTION OF EMBODIMENTS

Hereinafter, embodiment of the present invention will be described with reference to the drawings. Various features described in the embodiment below can be combined with each other.

A program for realizing a software in the present embodiment may be provided as a non-transitory computer readable medium that can be read by a computer or may be provided for download from an external server or may be provided so that the program can be activated on an external computer to realize functions thereof on a client terminal (so-called cloud computing).

In the present embodiment, the "unit" may include, for instance, a combination of hardware resources implemented by a circuit in a broad sense and information processing of software that can be concretely realized by these hardware resources. Further, various information is performed in the present embodiment, and the information can be represented by, for instance, physical values of signal values representing voltage and current, high and low signal values as a set of binary bits consisting of 0 or 1, or quantum superposition (so-called qubits), and communication/calculation can be performed on a circuit in a broad sense.

Further, the circuit in a broad sense is a circuit realized by combining at least an appropriate number of a circuit, a circuitry, a processor, a memory, or the like. In other words, it is a circuit includes application specific integrated circuit (ASIC), programmable logic device (e.g., simple programmable logic device (SPLD), complex programmable logic device (CPLD), field programmable gate array (FPGA)), or the like.

### 1. First embodiment

This section describes a mobile battery 100 according to a first embodiment.

### 1.1 Hardware configuration

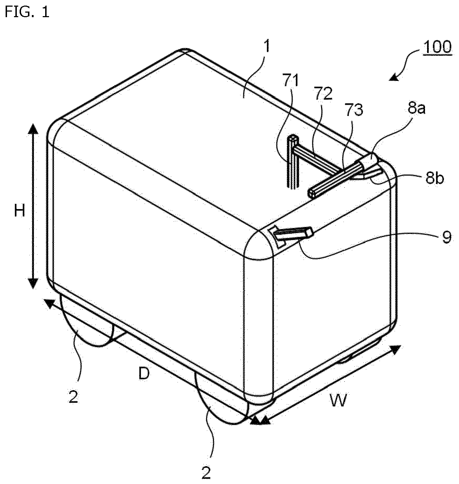

First, a hardware configuration of the mobile battery 100 will be described using FIG. 1. FIG. 1 is a perspective diagram of the mobile battery 100 according to the first embodiment.

### (Battery body 1)

As shown in FIG. 1, the mobile battery 100 comprises a battery body 1 and a moving unit 2. The battery body 1 is configured to be chargeable, dischargeable, or replaceable.

Although shape of the battery body 1 is not particularly limited, for instance, a substantially rectangular parallelepiped shape, a substantially cylindrical shape, or the like is preferable. Although size is not particularly limited, it is preferable to design width W, depth D, and height H within a range of 0.3 m to 10 m, for example, as long as the shape is a substantially rectangular parallelepiped shape. Specifically, values of the width W, the depth D and the height H may be, for instance, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, 10m, or may be in a range between any two of the numerical values exemplified above.

In the present embodiment, a housing space for housing a person is not formed inside the battery body 1. In other words, the battery body 1 used in the mobile battery 100 is configured as a storage battery unit, not for human occupancy.

### (Moving unit 2)

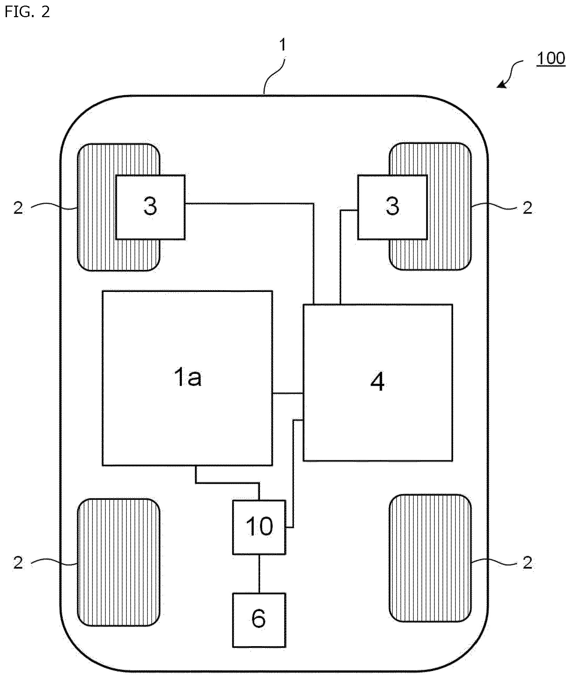

The moving unit 2 is connected to the motor 3 (will be described later with FIG. 2) and is configured to move the battery body 1. In other words, the mobile battery 100 in the present embodiment allows the moving unit 2 to rotate by the motor 3. More specifically, the moving unit 2 is an in-wheel motor system and is configured to include a wheel and the motor 3 included inside the wheel. By employing the in-wheel motor system, power can be efficiently transmitted to the moving unit 2. In the present embodiment, four wheels are used as the moving unit 2. That is, the mobile battery 100 is configured to be movable by rotating the wheel to which the motor 3 is connected. A number of wheel is not limited thereto. A caterpillar can also be adopted as the moving unit 2. As long as the mobile battery 100 is configured to be smoothly movable by the moving unit 2, form of the moving unit 2 is not particularly limited. Furthermore, the mobile battery 100 is not limited to one that travels on land. For instance, the moving unit 2 may be navigable on water as a screw, or the moving unit 2 may be flown as a propeller.

### (Motor 3)

The motor 3 is configured to generate power by electric power supplied from the battery body 1. With such power, the mobile battery 100 can be self-propelled. Alternatively, the mobile battery 100 can be configured to move using such power as auxiliary power for transportation. Here, the case of moving the power as auxiliary power for transportation means to realize a function similar to the electric power assist function of a so-called electric bicycle. In other words, when a transporter moves the mobile battery 100 by hand, electric power is supplied from the battery body 1, and by using this as auxiliary power, the mobile battery 100 can be moved with less force than originally required. Hereinafter, a state in which such auxiliary power is used is referred to as assist mode. A self-propelled state is referred to as self-propelled mode.

With such a design, electric power stored in the battery body 1 can be used for moving the mobile battery 100 without waste.

### (Handle 7)

A handle 7 can be provided on a top surface of the battery body 1. The handle 7 can be configured of a support member 71, a connecting member 72, and a gripping member 73. The support member 71 is a member on the top surface of the battery body 1 and supports the connecting member 72. The connecting member 72 is a member connecting the support member 71 and the gripping member 73. The gripping member 73 is a member to be gripped by a transporter moving the mobile battery 100 in the assist mode. The transporter can control a direction of movement of the mobile battery 100 by operating the handle 7.

### (Acceleration unit 8a and deceleration unit 8b)

The gripping member 73 may be provided with an acceleration unit 8a. The acceleration unit 8a is an accelerator mechanism that accelerates the mobile battery 100. By twisting the acceleration unit 8a back and forth, output of the motor 3 can be varied. Further, a deceleration unit 8b may be provided on the gripping member 73. The deceleration unit 8b is a brake mechanism that decelerates the mobile battery 100. In the present embodiment, the deceleration unit 8b has a lever shape, and by tilting the deceleration unit 8b in a depth direction (direction approaching the acceleration unit 8a), a resistance force such as a frictional force that stops the rotation of the moving unit 2 is generated.

### (Shift unit 9)

A shift unit 9 may be provided on a back surface of the battery body 1. The shift unit 9 switches between a forward mode, a backward mode, a neutral mode, and a parking mode. In the present embodiment, the shift unit 9 has a lever shape, and by changing a position of the shift unit 9 stepwise in a depth direction, the mode of the mobile battery 100 can be switched.

Preferably, an adjustment mechanism (not shown) may be provided, and strength of auxiliary power in the assist mode may be adjustable stepwise by the adjustment mechanism. Furthermore, it may be possible to automatically adjust the strength of the auxiliary power according to an inclination angle of a placement surface in the assist mode.

In this manner, the mobile battery 100 shifts to the self-propelled mode or the assist mode by the moving unit 2 and the motor 3 provided in the battery body 1. Thereby, even when mass of the battery body 1 is large, transportation burden on the transporter can be reduced.

### 1.2 Functional configuration

Next, a functional configuration of the mobile battery 100 will be described with reference to FIG. 2. FIG. 2 is a functional block diagram of the mobile battery 100. The battery body 1 comprises a power supply unit 1a, a motor 3, an inverter 4, a sensor 6, and a controller 10.

The power supply unit 1a supplies power to the motor 3. The power supply unit 1a includes, for example, an unshown battery pack and a power supply interface to the motor 3. The unshown battery pack in the power supply unit 1a is preferably any storage battery (secondary battery) that can be charged or discharged between an external apparatus or the motor 3, especially one that can be used repeatedly, for example, a lithium-ion battery or a lead-acid battery. In addition, it is preferable that the battery pack be replaceable when power stored in the battery pack runs out or when the battery pack deteriorates over time. Further, the entire battery body 1 may be replaceable.

The motor 3 allows power to be generated by electric power supplied from the power supply unit 1a and allows the moving unit 2 to move. When the moving unit 2 is a wheel, power generated by the motor 3 rotates the moving unit 2. In an example shown in FIG. 2, the motor 3 is arranged in each of two moving units 2 provided in front (front wheel drive). Then, one moving unit 2 is individually rotated by one motor 3. Here, the motor 3 may be arranged in each of the two moving units 2 provided in rear (rear wheel drive).

The inverter 4 converts direct current supplied from the power supply unit 1a into alternating current. Then, the alternating current is delivered to the motor 3.

The sensor 6 detects an amount of operation of the handle 7, an amount of operation of the acceleration unit 8a, an amount of operation of the deceleration unit 8b, and a position of the shift unit 9.

The controller 10 is connected to the power supply unit 1a, the inverter 4, and the sensor 6, and controls each of these units. The controller 10 performs various control processes by executing process based on a program stored in a storage unit (not shown) provided in the mobile battery 100.

The controller 10 is configured to restrict power supply from the battery body 1 to the motor 3 when a predetermined condition is not fulfilled. The predetermined condition is not particularly limited, and may be, for instance, when a key of a transporter is not authenticated, when a predetermined period of time (e.g., nighttime) is specified, when moving outside a predetermined range, or when in the parking mode.

The controller 10 is configured to permit power supply from the battery body 1 to the motor 3 when a predetermined condition is fulfilled. The predetermined condition is not particularly limited, and may be, for instance, when a transporter is authenticated, when a predetermined period of time (e.g., daytime, 10:00 a.m. to 7:00 p.m., etc.) is specified, when moving within a predetermined range, or when in the forward mode, the backward mode, or the neutral mode.

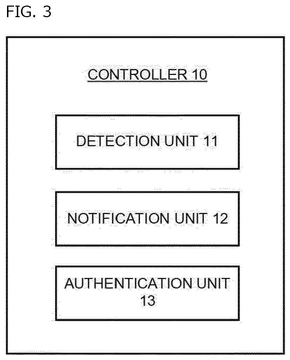

FIG. 3 is a block diagram illustrating various functions of the controller 10. As shown in FIG. 3, in the present embodiment, the controller 10 includes a detection unit 11, a notification unit 12, and an authentication unit 13 as functions. These components can include those in which information processing by a software (stored in the storage unit) is specifically realized by a hardware (controller 10).

The detection unit 11 is configured to detect movement of the battery body 1 in a state in which power supply from the battery body 1 to the motor 3 is restricted. Accordingly, when the mobile battery 100 is not in the self-propelled mode or the assist mode, it can be detected that the mobile battery 100 is forcibly moved or transported.

The notification unit 12 is configured to notify that the battery body 1 is moved in the state in which power supply from the battery body 1 to the motor 3 is restricted when a movement of the battery body 1 is detected by the detection unit 11. Here, manner of notification is not particularly limited, and for example, occurrence of unauthorized movement can be notified to a third party by sounding an alarm, contacting a security company, or contacting an information processing apparatus of a person concerned by e-mail or chat, etc.

The authentication unit 13 is configured to execute an authentication process for permitting power supply from the battery body 1 to the motor 3. Here, manner of the authentication process is not limited, and may be, for example, on/off control by a mechanical lock configured to switch insertion or extraction of an insulator, or electronic or electrical control. For electronic or electrical control, authentication by an ID card held by a transporter, authentication by a multifunctional information terminal such as a smartphone, password authentication, biometric authentication, voice authentication, or the like can be adopted.

The controller 10 is configured to permit power supply from the battery body 1 to the motor 3 when the authentication process is executed by the authentication unit 13. Accordingly, when it is confirmed that a transporter has permission to move the mobile battery 100, the mobile battery 100 can be shifted to the self-propelled mode or the assist mode.

Therefore, with the mobile battery 100 according to the present embodiment, the self-propelled mode or the assist mode can be realized by the moving unit 2 and the motor 3, and movement of the battery body 1 itself can be realized without relying on human power or while supporting human power.

Accordingly, as the mobile battery 100 can be self-propelled, it becomes possible to transport the mobile battery 100 to a destination during a period of time when traffic is relatively light, such as at night, for example. In addition, in a disaster area where energy is in short supply, the assist mode enables the transporter to transport the mobile battery 100 to an appropriate location even in areas where footing is poor.

Further, the battery body 1 supplies electric power externally at a location where the mobile battery 100 is arranged, as well as to be used as power for the motor 3 necessary for moving the mobile battery 100 itself. In other words, conventionally, when transporting a storage battery, the storage battery is mounted on a vehicle or the like, and the storage battery is transported by a driver. With the mobile battery 100 in the present embodiment, the battery body 1 is self-propelled or is transported to an arrangement location by the assist mode if necessary. By having the battery body 1 provide both the power necessary for such transportation and the power supply at the arrangement location, transportation cost can be reduced even for a large-sized storage battery.

### 1.3 Variation

Next, various kinds of variations of the mobile battery 100 according to the first embodiment will be described.

### (First variation)

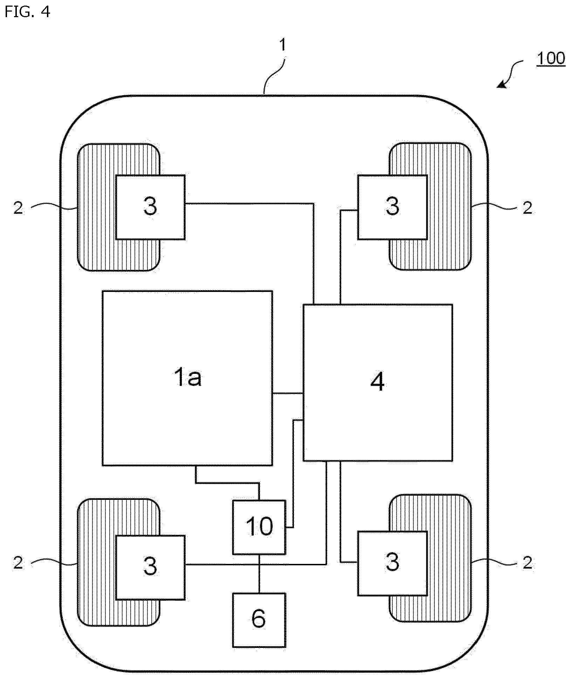

FIG. 4 is a functional block diagram of a mobile battery 100 according to a first variation of the first embodiment. As shown in FIG. 4, the motor 3 may be arranged in two moving units 2 provided in front and in two moving units 2 provided in rear, respectively (four-wheel drive). Then, one moving unit 2 is individually rotated by one motor 3.

### (Second variation)

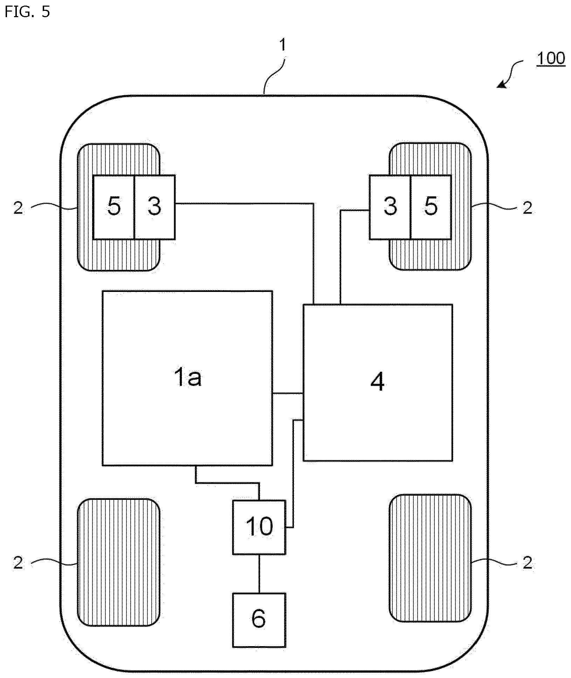

FIG. 5 is a functional block diagram of a mobile battery 100 according to a second variation of the first embodiment. As shown in FIG. 5, a reduction mechanism 5 may be provided near the motor 3. The reduction mechanism 5 is configured of, for instance, a reduction gear. By driving the moving unit 2 with the motor 3 via the reduction mechanism 5, the motor 3 can be made smaller than when the reduction mechanism 5 is not provided.

### (Third variation)

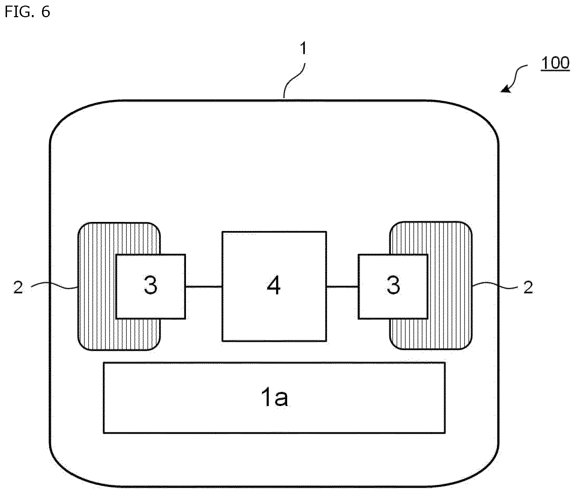

FIG. 6 is a functional block diagram of a mobile battery 100 according to a third variation of the first embodiment. As shown in FIG. 6, two moving units 2 may be provided. In this case, an overturn prevention mechanism (not shown) may be provided to prevent the mobile battery 100 from overturning.

### (Fourth variation)

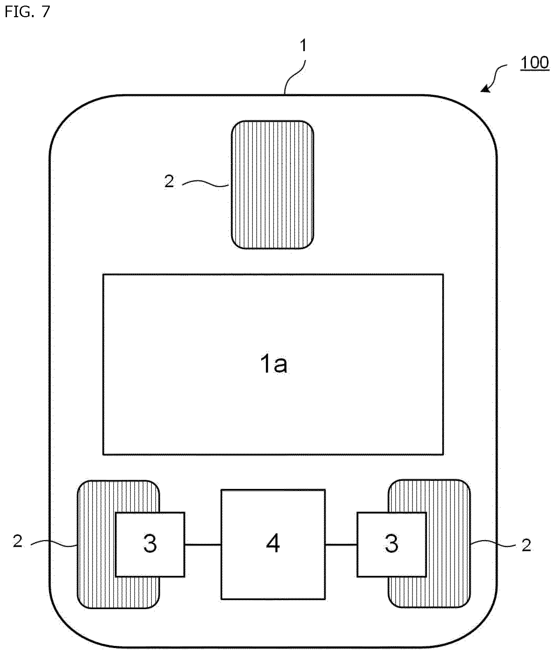

FIG. 7 is a functional block diagram of a mobile battery 100 according to a fourth variation of the first embodiment. As shown in FIG. 7, three moving units 2 may be provided.

### 2. Second embodiment

In this section, a mobile battery 100 according to a second embodiment will be described. Note that description of the common parts with the mobile battery 100 according to the first embodiment will be omitted.

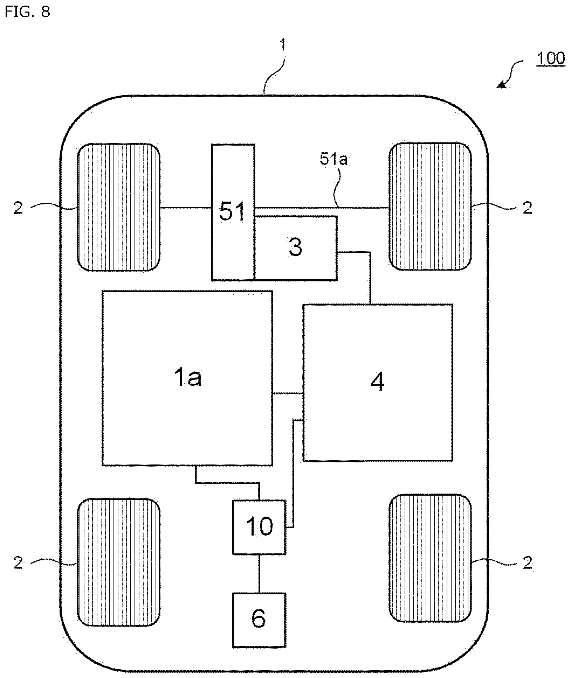

FIG. 8 is a functional block diagram of the mobile battery 100 according to the second embodiment. Unlike the mobile battery 100 according to the first embodiment, the mobile battery 100 according to the second embodiment does not adopt an in-wheel motor system. Specifically, the mobile battery 100 according to the second embodiment comprises a transaxle 51 and a drive shaft 51a. The transaxle 51 includes a reduction mechanism (reduction gear train) that allows output rotation number of the motor 3 to reduce and a differential mechanism that allows a difference in wheel velocity between left and right wheels. The drive shaft 51a is a shaft that connects the transaxle 51 to the moving unit 2 (e.g., wheel).

In an example shown in FIG. 8, a front moving unit 2 (front wheel) is configured to drive. In the first embodiment, since an in-wheel system is adopted, impact from the moving unit 2 to the motor 3 is directly received, but in the second embodiment, such impact can be reduced, and burden on the motor 3 can be reduced.

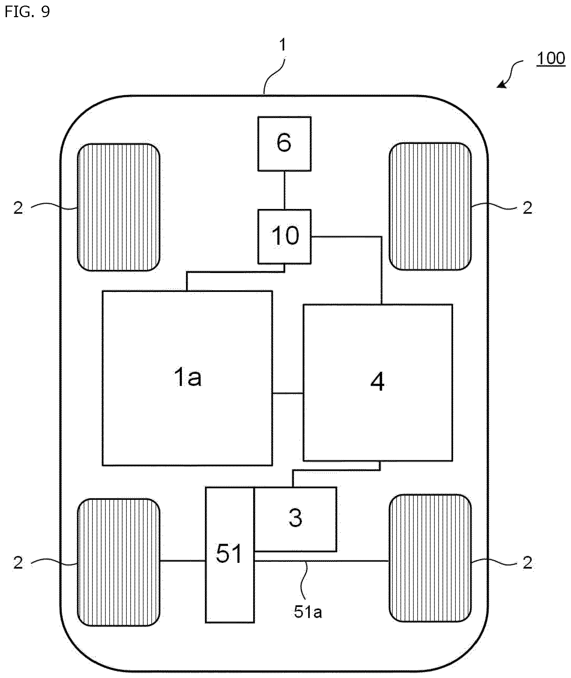

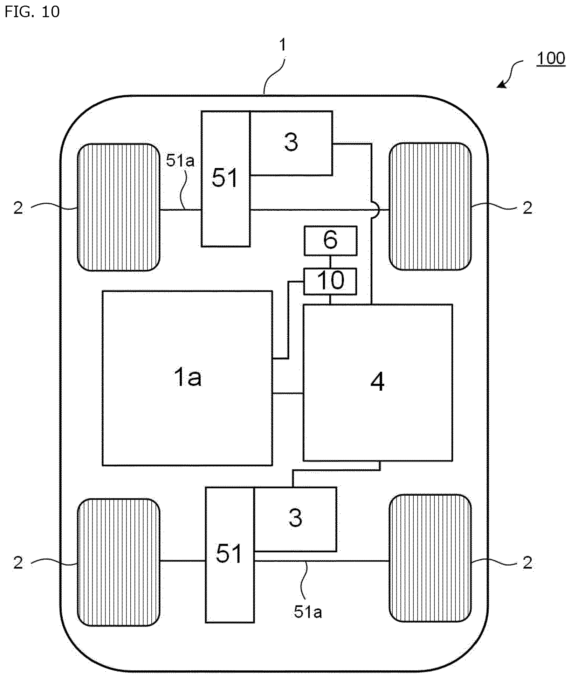

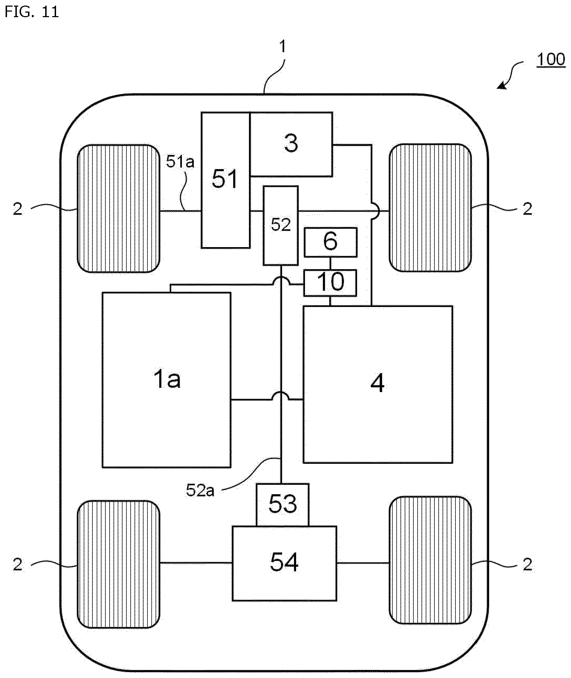

A further variation of the second embodiment may also be implemented. FIG. 9 is a functional block diagram of a mobile battery 100 according to a first variation of the second embodiment. FIG. 10 is a functional block diagram of the mobile battery 100 according to a second variation of the second embodiment. FIG. 11 is a functional block diagram of a mobile battery 100 according to a third variation of the second embodiment.

In the first variation shown in FIG. 9, a rear moving unit 2 (rear wheel) is configured to drive. Specifically, the motor 3, the transaxle 51, and the drive shaft 51a are arranged to allow the rear moving unit 2 to drive.

In the second variation shown in FIG. 10, a front moving unit 2 and a rear moving unit 2 are both configured to drive (four-wheel drive). Specifically, the motor 3, the transaxle 51, and the drive shaft 51a are arranged respectively to allow the front moving unit 2 and the rear moving unit 2 to drive.

In the third variation shown in FIG. 11, as in the second variation, a front moving unit 2 and a rear moving unit 2 are both configured to drive (four-wheel drive). Specifically, in relation to the front moving unit 2, the motor 3, the transaxle 51 and the drive shaft 51a are arranged to allow the front moving unit 2 to drive. In relation to the rear moving unit 2, a coupling 53 and a differential mechanism 54 are arranged to allow the rear moving unit 2 to drive. The differential mechanism 54, as mentioned above, is a mechanism that allows for a difference in wheel velocity between left and right wheels.

A power splitting mechanism 52 is configured to distribute motor torque from the motor 3 to the front moving unit 2 and the rear moving unit 2. The coupling 53 is an electronically controlled clutch. The power splitting mechanism 52 and the coupling 53 are connected via a propeller shaft 52a. By changing a degree of coupling, torque distribution to the front moving unit 2 and to the rear moving unit 2 can be controlled.

Note that the configuration for allowing the front moving unit 2 and the rear moving unit 2 to drive according to the third variation may be implemented by arranging them in reverse.

### 3. Third embodiment

Next, a third embodiment will be described.

In JP 2019/168434 A, an electric wire and a utility pole for supporting the electric wire are used to supply electric power to a household. In Patent Document 1, a tilt detection apparatus that detects tilt, collapse, and breakage of a utility pole is disclosed.

However, in the case of natural disaster such as earthquake or typhoon, an electric wire may be cut, or a utility pole may collapse in many places. In such case, even if a collapsed pole is detected, it takes a lot of time and cost to repair the electric wire and the utility pole or replace them with new ones. In addition, depopulation has progressed in some areas, and it has become difficult to maintain or extend electric wires and the electric poles in all areas.

Therefore, it is considered to centrally manage information of a plurality of mobile batteries that self-propelled within a predetermined area.

### 3.1 System configuration

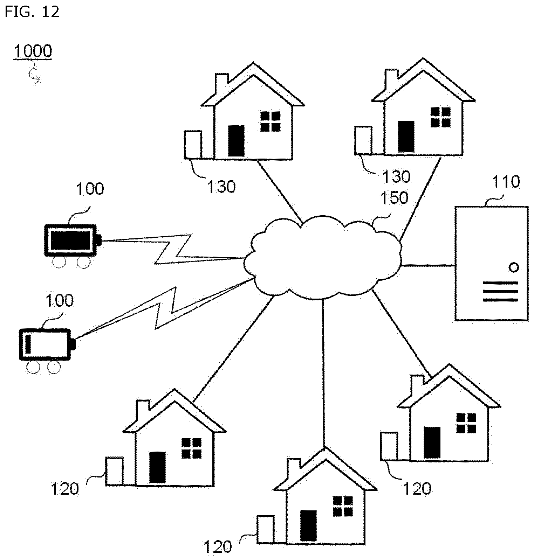

FIG. 12 is a diagram showing an example of a system configuration of an information processing system 1000. As a system configuration, the information processing system 1000 comprises a server apparatus 110, a plurality of battery apparatuses 100 (mobile battery 100), a plurality of storage batteries 120 that receive power supply from the mobile batteries 100, and a plurality of power supply apparatuses 130 that supply power to the mobile battery 100. The server apparatus 110, the plurality of mobile batteries 100, the plurality of storage batteries 120, and the plurality of power supply apparatuses 130 are communicatively connected via a network 150. The mobile battery 100 is an apparatus that has a wheel and self-propelled within a predetermined area by its own electric power, as shown in FIG. 12. The mobile battery 100 provides electric power to the storage battery 120 in the area. The mobile battery 100 receives power supply from the power supply apparatus 130 in the area. The plurality of storage batteries 120 is an example of a plurality of first devices that receive power supply from any one of the plurality of mobile batteries 100. The first device is not limited to a storage battery but may be a battery-powered vehicle such as a car, a motorcycle, a bicycle, a boat, or a household appliance. The apparatus receiving power supply from the mobile battery 100 may receive power supply directly from the mobile battery 100 or may receive power supply from the mobile battery 100 via any device. The storage battery 120 is an apparatus that supplies electric power to a household appliance. The plurality of power supply apparatuses 130 are an example of a plurality of secondary devices that charge each of the plurality of mobile batteries 100. The second device is not limited to a storage battery but may be a battery-powered vehicle such as a car, a motorcycle, a bicycle, a boat, or a household appliance. The apparatus supplying power to the mobile battery 100 may supply power directly to the mobile battery 100 or may supply power to the mobile battery 100 via any device.

Here, the storage battery 120 may include a function of the power supply apparatus 130, or the power supply apparatus 130 may include a function of the storage battery 120.

In the present embodiment, it is assumed that a user receives electric power from the mobile battery 100 to operate a household appliance at home or the like. The mobile battery 100 may be owned by the user through purchase or borrowing, or it may be a property of a third party. If the user owns the battery 100, for example, during daytime when the user is away from home, or during night when the user is asleep and rarely uses electric power, the mobile battery 100 can be moved to another user who needs electric power, and the electric power can be provided. Alternatively, the mobile battery 100 owned by another user can come to house and provide electric power. Moreover, when the user uses too much electric power and runs out of electric power, the mobile battery 100 can be allowed to move to another user who has excess electric power to charge the mobile battery 100. Alternatively, it is also possible to have the mobile battery 100 owned by another user come and charge.

### 3.2 Hardware configuration

### (1) Hardware configuration of server apparatus 110

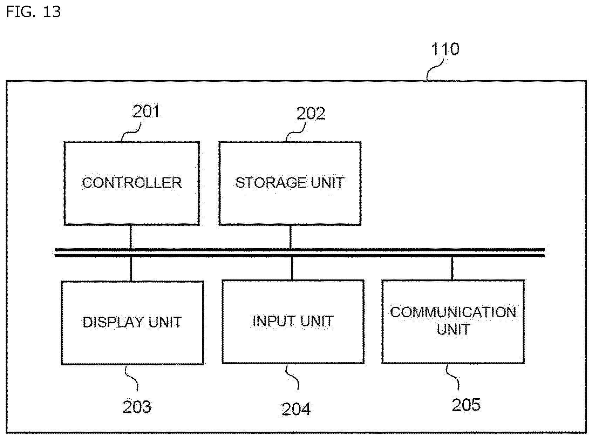

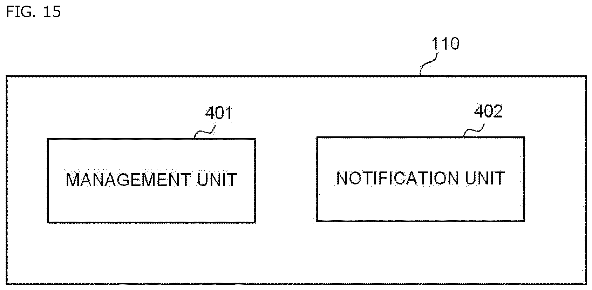

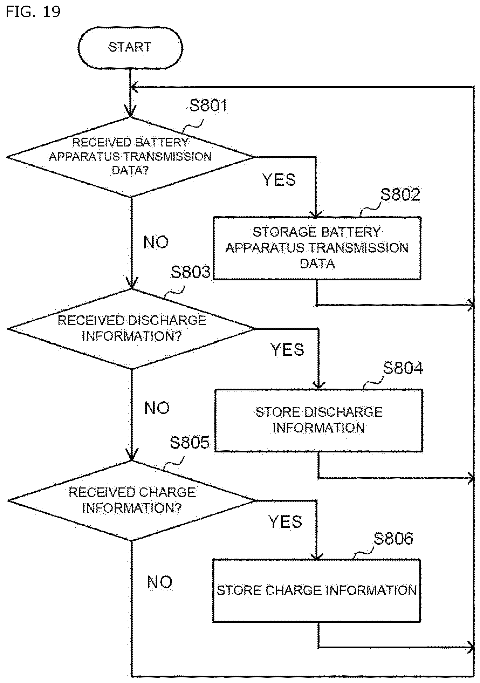

FIG. 13 is a diagram showing an example of a hardware configuration of the server apparatus 110. As a hardware configuration, the server apparatus 110 includes a controller 201, a storage unit 202, a display unit 203, an input unit 204, and a communication unit 205. The controller 201 controls entire server apparatus 110. The storage unit 202 stores a program of the server apparatus 110 and data used when the controller 201 executes processing based on the program of the server apparatus 110. The controller 201 executes processing based on the program of the server apparatus 110 stored in the storage unit 202, thereby realizing functions of FIGS. 15, 21, 27, 28, and 29 and flowcharts of FIGS. 19, 20, 23, 24, 25, 26, 30, and 31, which will be described later. The input unit 204 inputs operation information to the controller 201 in response to user operation. The display unit 203 displays a screen or the like generated by the controller 201. The communication unit 205 connects the server apparatus 110 to the network 15 and controls communication with other apparatus.

### (2) Hardware configuration diagram of mobile battery 100

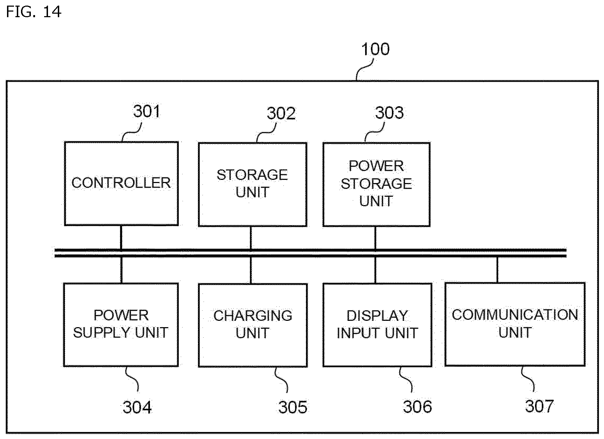

FIG. 14 is a diagram showing an example of a hardware configuration of the mobile battery 100. As a hardware configuration, the mobile battery 100 includes a controller 301, a storage unit 302, a power storage unit 303, a power supply unit 304, a charging unit 305, a display input unit 306, and a communication unit 307. The controller 301 controls entire mobile battery 100. The storage unit 302 stores a program of the mobile battery 100 and data used when the controller 301 executes processing based on the program of the mobile battery 100. The controller 301 executes processing based on the program of the mobile battery 100 stored in the storage unit 302, thereby realizing a function of the mobile battery 100. The power supply unit 304 supplies power to the storage battery 120.

The power storage unit 303 stores electric power charged via the charging unit 305. The power supply unit 304 supplies the electric power stored in the power storage unit 303 to other apparatus, such as the storage battery 120. The charging unit 305 receives power supply from a power source, e.g., the storage battery 120, and stores electric power in the power storage unit 303. The display input unit 306 displays information and inputs operation information in response to the user operation to the controller 301. The communication unit 307 connects the mobile battery 100 to the network 150 and controls communication with other apparatus.

### 3.3 Functional configuration

FIG. 15 is a diagram showing an example of a functional configuration of the server apparatus 110. As a functional configuration, the server apparatus 110 includes a management unit 401 and a notification unit 402.

### (Management unit 401)

The management unit 401 is configured to store first management data in relation to a plurality of mobile batteries 100 located in a predetermined area and self-propelled in the storage unit 202 and manage the first management data. The first management data includes discharge information for each of the plurality of mobile batteries 100, charge information for each of the plurality of mobile batteries 100, and location information for each of the plurality of mobile batteries 100. The information shall be transmitted from each of the plurality of mobile batteries 100 to the server apparatus 110 via the network 150.

By including the management unit 401, the server apparatus 110 can centrally manage information of a plurality of mobile batteries that self-propelled in a predetermined area.

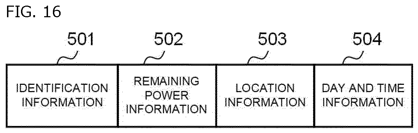

FIG. 16 is a diagram showing an example of data that the mobile battery 100 periodically transmits to the server apparatus 110. The data that the mobile battery 100 periodically transmits to the server apparatus 110 is hereinafter referred to as mobile battery transmission data. The mobile battery transmission data includes identification information 501, remaining power information 502, location information 503, and date and time information 504. The identification information 501 is information identifying the mobile battery 100. The remaining power information 502 is information indicating an amount of remaining power in the mobile battery 100. The location information 503 is information indicating a location of the mobile battery 100. The date and time information 504 is information indicating date and time when the mobile battery transmission data is transmitted.

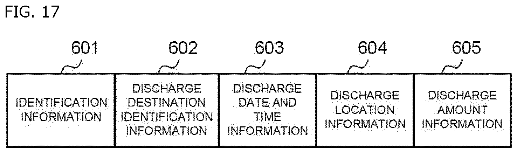

When the mobile battery 100 discharges to the storage battery 120, discharge information is transmitted to the server apparatus 110. FIG. 17 is a diagram showing an example of the discharge information. The discharge information shown in FIG. 17 includes identification information 601, discharge destination identification information 602, discharge date and time information 603, discharge location information 604, and discharge amount information 605. The identification information 601 is information indicating the mobile battery 100 that has been discharged. The discharge destination identification information 602 is information identifying an apparatus at a discharge destination, i.e., the storage battery 120 in which the discharge is performed. The discharge date and time information 603 is information indicating date and time when the discharge is performed. The discharge location information 604 is information indicating a location of a discharge destination where the discharge is performed. The discharge amount information 605 is information indicating an amount that is discharged.

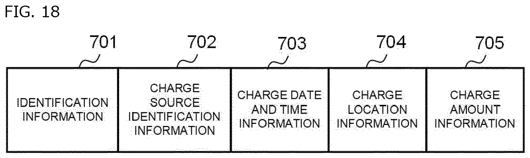

When the mobile battery 100 is charged from the power supply apparatus 130, the charge information is transmitted to the server apparatus 110. FIG. 18 is a diagram showing an example of the charge information. The charge information shown in FIG. 18 includes identification information 701, charge source identification information 702, charge date and time information 703, charging location information 704, and charge amount information 705. The identification information 701 is information identifying the charged mobile battery 100. The charge source identification information 702 is information identifying a charging source apparatus, that is, the power supply apparatus 130 that has performed charging. The charge date and time information 703 is information indicating date and time when charging is performed. The charge location information 704 is information indicating a location of charging source where the charging is performed. The charge amount information 705 is information indicating an amount of power that is charged.

### (Notification unit 402)

The notification unit 402 notifies a user of each of the plurality of mobile batteries 100 of recommendation information based on the first management data in relation to the plurality of mobile batteries 100 stored in the storage unit 202. More specifically, the notification unit 402 analyzes the first management data and grasps, for example, number of charge, number of discharge, or increase/decrease in amount of stored power of each of the plurality of mobile batteries 100. The notification unit 402, for example, may notify the user of the mobile battery 100, whose power amount is always equal to or greater than a predetermined value and whose number of charge is equal to or greater than a predetermined number, that if discharge more, point or money corresponding to the discharged power can be obtained. In this way, useful information that proposes a response in such a manner that the user will benefit is called recommendation information. Here, the number of charge is a number of times the mobile battery 100 is supplied with power from any power supply apparatus 130 among the plurality of power supply apparatuses 130. The number of discharge is a number of times the mobile battery 100 supplies electric power to any storage battery 120 among the plurality of storage batteries 120. A method of notifying the recommendation information may be transmission of an e-mail, display on a screen of a dedicated website of the corresponding user, or may be message transmission to SNS (Social Networking Service) account of the user. In other words, any method may be adopted as long as the recommendation information can be notified to the user. The above-mentioned "if discharge more, point or money corresponding to the discharged power can be obtained" is an example of the recommendation information. Other example of the recommended information may include a destination of the mobile battery 100, a route to the destination, time to arrive to the destination, or the like.

The server apparatus 110 can provide useful information to the user in an area where power is provided by a self-propelled mobile battery by having a management unit 401 and a notification unit 402.

### 3.4 Information processing

### (Data storage)

FIG. 19 is a flowchart showing an example of information processing in relation to data storage in the server apparatus 110.

When the server apparatus 110 receives data from any of the plurality of mobile batteries 100, in S801, the management unit 401 determines whether the data is mobile battery transmission data. If the management unit 401 determines that the mobile battery transmission data is received, processing proceeds to S802. If the management unit 401 determines that the data is not mobile battery transmission data, then the processing proceeds to S803.

In S802, the management unit 401 stores the received mobile battery transmission data in the storage unit 202 and manages the received mobile battery transmission data.

In S803, the management unit 401 determines whether received data is discharge information. If the management unit 401 determines that the data is discharge information, the processing proceeds to S804. If the management unit 401 determines that the data is not discharge information, then the processing proceeds to S805.

In S804, the management unit 401 stores the received discharge information in the storage unit 202 and manages the received discharge information.

In S805, whether received data is charge information is determined. If the management unit 401 determines that the data is charge information, the processing proceeds to S806. If the management unit 401 determines that the data is not charge information, the processing from S801 is repeated.

In S806, the management unit 401 stores the received charge information in the storage unit 202 and manages the received charge information.

The management unit 401 associates the mobile battery transmission data, the discharge information, and the charge information in relation to the same mobile battery, stores them in the storage unit 202, and manage them as the first management data.

Note that order of determination of S801, S803, and S805 are not limited to that shown in FIG. 19. The order of determination may be any of them performs first or last, or may be perform at the same time.

### (Recommendation information notification)

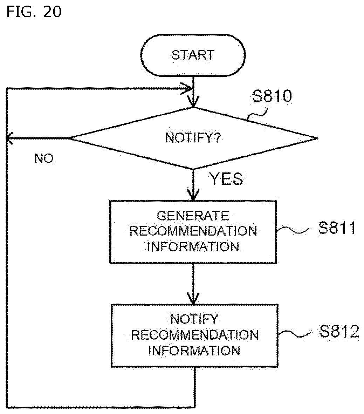

FIG. 20 is a flowchart showing an example of processing in relation to the recommendation information in the server apparatus 110. Processing in FIG. 19 and processing in FIG. 20 may be processed in parallel.

When the server apparatus 110 receives data from any of the plurality of mobile batteries 100, in S810, the notification unit 402 determines whether to notify the recommendation information. If the notification unit 402 determines to notify the recommendation information, the processing proceeds to S811. If the notification unit 402 determines not to notify the recommendation information, the processing in S810 repeats each time the data is received from any one of the plurality of mobile batteries 100. For instance, the notification unit 402 determines to notify the recommendation information when a predetermined date and time are reached.

In S811, the notification unit 402 generates recommendation information with respect to the user of the mobile battery 100 based on the first management data.

In S812, the notification unit 402 notifies the recommendation information. When the processing of S812 is completed, the notification unit 402 returns the processing to S810.

According to the third embodiment, useful information can be provided to the user in an area where electric power is provided by a self-propelled mobile battery.

### 3.5 Variation

Various types of variations of the mobile battery 100 according to the third embodiment will then be described.

### <First variation>

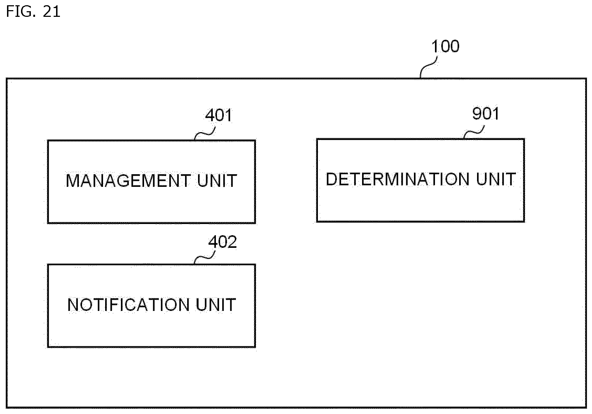

Next, a first variation will be described. In the first variation, description of the same parts as in the third embodiment will be omitted. FIG. 21 is a diagram showing an example of functional configuration of the mobile battery 100 according to the first variation. The functional configuration of the mobile battery 100 according to the first variation further includes a determination unit 901 compared to the functional configuration of the mobile battery 100 in FIG. 15 according to the third embodiment.

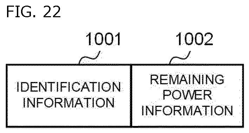

In addition, a management unit 401 of the first variation further stores second management data in relation to a plurality of storage batteries 120 that receive power supply from any mobile battery 100 of a plurality of mobile batteries 100 in a storage unit 202, and manages the second management data. The second management data includes charge information for each of the plurality of storage batteries 120 and location information for each of the plurality of storage batteries 120. FIG. 22 is a diagram showing an example of charge information. The charge information of each of the plurality of storage batteries 120 includes identification information 1001 and remaining power information 1002. The identification information 1001 is information that identifies the storage battery 120. The remaining power information 1002 is information that indicates an amount of remaining power in the storage battery 120. The storage battery 120 periodically transmits the charge information and the location information to the server apparatus 110 as storage battery transmission data.

The determination unit 901 of the first variation determines a destination of each of the plurality of mobile batteries based on the first management data and the second management data. For instance, the determination unit 901 performs optimization using an objective function with location information of each of the plurality of mobile batteries 100 and remaining power information of each of the plurality of mobile batteries 100 in the first management data and location information of each of the plurality of storage batteries 120 and remaining power information of each of the plurality of storage batteries 120 in the second management data as variables, and determines a destination of each of the plurality of mobile batteries 100. The determination unit 901 determines the destination of each of the plurality of mobile batteries 100 in such a manner that the mobile battery 100 with remaining power greater than a predetermined value is allowed to direct to an object whose movement distance is short and the remaining power of the storage battery 120 is less than a predetermined value. If there is no demand for charging, one of the destinations is not to move.

However, the way in which the determination unit 901 determines the destination is not limited to this. For example, the determination unit 901 may determine the destination in such a manner that the mobile battery 100 of the user that has a predetermined contract among the plurality of mobile batteries 100 is preferentially directed to the nearby storage battery 120.

Here, optimization means obtaining a value of a variable that maximizes or minimizes the value of the objective function under given constraints. In the case of route search, the determination unit 901 obtains a variable that minimizes a route length or a movement cost using the route length or the movement cost as an objective function. In the case of the present embodiment, an example of the movement cost is an amount of electric power of the mobile battery 100 for movement.

The determination unit 901 may use a machine-learned learned model to perform determination processing. A plurality of combinations of input data and output data to the determination unit 901 using the learned model are prepared as learning data, knowledge is acquired from them by machine learning, and a learned model that outputs the output data with respect to the input data based on the acquired knowledge is created. The learned model can be configured of, for instance, a neural network model. Then, the learned model performs processing of the determination unit 901 by operating together with a controller 201 as a program for performing processing similar to that of the determination unit 901. For instance, when the learned model is used in the determination unit 901, for each time a destination of each of the plurality of mobile batteries 100 is determined, learning data is generated by using first management data, second management data, etc. as input data, and using actual destination of each of the plurality of mobile batteries 100, an amount of electric power required to get to the destination, and an amount of electric power discharged at the destination as output data, and the learned model is generated by executing the machine learning. By using the learned model, the destination can be output from the first management data and the second management data. Note that the learned model may be updated after certain processing as necessary.

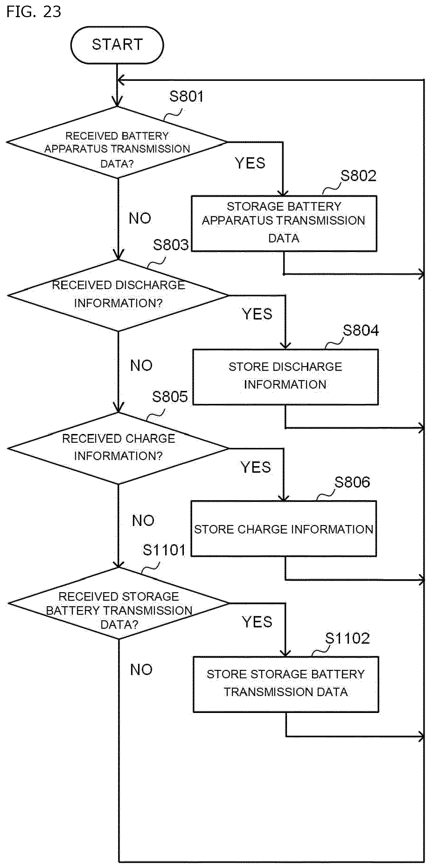

FIG. 23 is a flowchart showing an example of information processing in relation to data storage in the server apparatus 110 according to the first variation.

When data is received from any storage battery 120 among the plurality of storage batteries 120, in S1101, the management unit 401 determines whether the data is storage battery transmission data. If the management unit 401 determines that the data is storage battery transmission data, processing proceeds to S1102. If the management unit 401 determines that the data is not storage battery transmission data, the processing returns to S801.

In S1102, the management unit 401 stores the received storage battery transmission data in the storage unit 202 as second management data and manages the data.

Note that order of determination of S801, S803, S805, and S1101 are not limited to those shown in FIG. 23. The order of the determination may be any of them performs first or later, or may be perform at the same time.

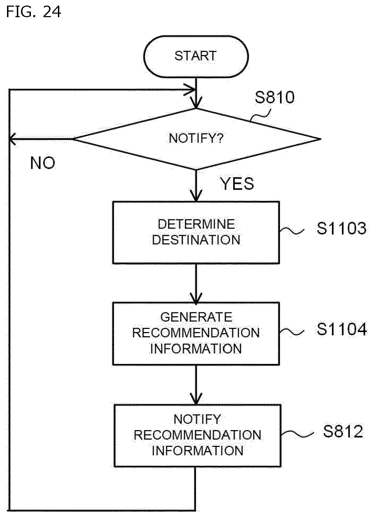

FIG. 24 is a flowchart showing an example of information processing in relation to recommendation information in the server apparatus 110 according to the first variation. Processing in FIG. 23 and processing in FIG. 24 may be processed in parallel.

In S1103, the determination unit 901 determines a destination of each of the plurality of mobile batteries based on the first management data and the second management data.

In S1104, the determination unit 901 generates recommendation information including information on the destination determined in S1103.

According to the first variation, the recommendation information includes information on the destination of the mobile battery 100 of the user. Thus, for example, the user can set a destination, etc. for the mobile battery 100 based on the destination information and allow the mobile battery 100 to move to the set destination. This allows the user to effectively use the self-propelled mobile battery 100 to obtain point or money according to the amount of discharged power.

### <Second variation>

Next, a second variation will be described. In the second variation, same parts as in the third embodiment and the first variation are omitted.

The management unit 401 according to the second variation further stores third management data in relation to a plurality of power supply apparatuses 130 that supply power to any mobile battery 100 of each of a plurality of mobile batteries 100 in a storage unit 202, and manage the third management data. The third management data includes location information for each of the plurality of power supply apparatuses 130. The power supply apparatuses 130 periodically transmit the location information to the server apparatus 110.

The determination unit 901 according to the second variation determines a destination of each of the plurality of mobile batteries based on the first management data, the second management data, and the third management data. For instance, the determination unit 901 performs optimization using an objective function with location information of each of the plurality of mobile batteries 100 and remaining power information of each of the plurality of mobile batteries 100 in the first management data, location information of the plurality of storage batteries 120 and remaining power information of the plurality of storage batteries 120 in the second management data, and location information in each of the plurality of power supply apparatuses 130 as variables, and determines a destination of each of the plurality of mobile batteries 100. The determination unit 901 determines the destination of each of the plurality of mobile batteries 100 in such a manner that the mobile battery 100 with remaining power greater than a predetermined value is allowed to direct to an object whose movement distance is short and the remaining power of the storage battery 120 is less than a predetermined value. Further, the destination of each of the plurality of mobile batteries 100 is determined in such a manner that the mobile battery 100 whose remaining power is less than a predetermined value is directed to the power supply apparatus 130. If there is no demand to charge or to be charged, one of the destinations is not to move.

However, the way in which the determination unit 901 determines the destination is not limited to this. For example, the determination unit 901 may determine the destination in such a manner that the mobile battery 100 of the user that has a predetermined contract among the plurality of mobile batteries 100 is preferentially directed to the nearby storage battery 120 or the nearby power supply apparatus 130.

For instance, when a learned model is used in the determination unit 901, for example, for each determination of destination of the plurality of mobile batteries 100 in the past, learning data is generated by using the first management data, the second management data, the third management data, or the like are used as input data, and using the actual destination of each of the plurality of mobile batteries 100, amount of power required to reach the destination, amount of power discharged at the destination, and amount of power charged at the destination as output data, and machine learning is executed and the learned model is generated. By using such learned model, the destination can be output from the first management data, the second management data, and the third management data. A new learned model may be generated as necessary, such as after a predetermined period of time has elapsed after generation of the learned model. Furthermore, the generated new model may be updated at a timing as required.

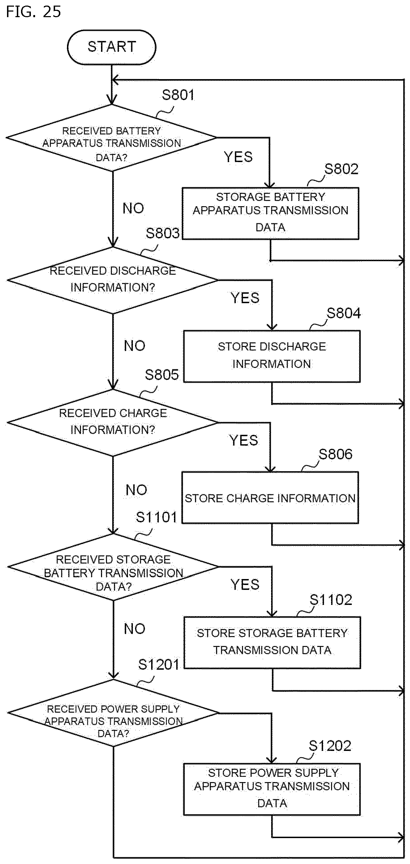

FIG. 25 is a flowchart showing an example of processing in relation to data storage in the server apparatus 110 according to the second variation.

When receiving data from any power supply apparatus 130 among the plurality of power supply apparatuses 130, the management unit 401 determines whether the data is power supply apparatus transmission data in S1201. If the management unit 401 determines that the data is power supply apparatus transmission data, the processing proceeds to S1202. If the management unit 401 determines that the data is not power supply apparatus transmission data, then the processing returns to S801.

Note that order of determination of S801, S803, S805, S1101, and S1201 are not limited to that shown in FIG. 25. The order of determination may be any of them performs first or last, or may be perform at the same time.

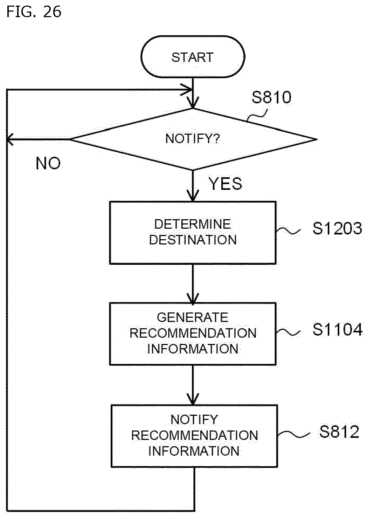

FIG. 26 is a flowchart showing an example of processing in relation to the recommendation information in the server apparatus 110 according to the second variation. Processing in FIG. 25 and processing in FIG. 26 may be processed in parallel.

In S1203, the determination unit 901 determines a destination of each of the plurality of mobile batteries based on the first management data, the second management data, and the third management data.

According to the second variation, the recommendation information includes destination in consideration of discharging and charging. Therefore, for instance, the user can set a destination, etc. for the mobile battery 100 based on the recommendation information and allow the mobile battery 100 to move to the set destination. This allows the user to effectively use the self-propelled mobile battery 100 to obtain point or money according to amount of power discharged. For example, if the mobile battery 100 is about to run out of power, it can be charged from the power supply apparatus 130.

### <Third variation>

Third variation will be described below. In the third variation, same parts as in the third embodiment, the first variation, and the second variation are omitted.

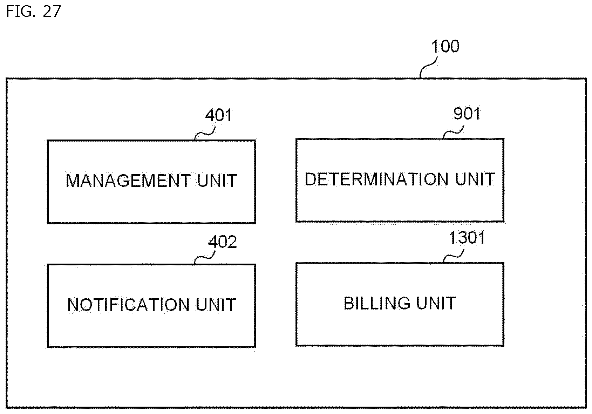

FIG. 27 is a diagram showing an example of a functional configuration of a mobile battery 100 in the third variation. The functional configuration of the mobile battery 100 according to the third variation further includes a billing unit 1301 compared to the functional configuration of the mobile battery 100 according to the second variation. The billing unit 1301 is configured to perform a billing process based on the first management data. More specifically, based on the discharge information in the first management data, the billing unit 1301 specifies when which mobile battery 100 discharged how much power to which storage battery 120, and performs a process of charging a user of the storage battery 120 with point or money according to amount of power discharged. Further, the billing unit 1301 performs a process of giving a user of the mobile battery 100 the charged point or money. In the case of point, the billing unit 1301 transmits an instruction to a system or the like managing point to add point according to amount of electric power to the user of the mobile battery 100 that has provided electric power. Furthermore, the billing unit 1301 transmits an instruction to the system or the like managing point to subtract point according to amount of electric power to the user of the storage battery 120 that has received electric power. In the case of money, the billing unit 1301 transmits an instruction to a system or the like managing money to deposit money corresponding to amount of electric power to the user of the mobile battery 100 that has provided electric power. Further, the billing unit 1301 transmits an instruction to the system or the like managing money to withdraw money corresponding to amount of electric power to the user of the storage battery 120 that has received electric power.

A notification unit 402 in the third variation includes a result of the billing process by the billing unit 1301 in the recommendation information.

According to the third variation, it is possible to receive point or money from the user of the storage battery 120 that has received electric power. Further, according to the third variation, it is possible to give point or money to the user of the mobile battery 100 that has provided electric power.

### <Fourth variation>

Next, a fourth variation will be described. In the fourth variation, same parts as in the third embodiment, the first variation, the second variation, and the third variation are omitted.

For instance, the determination unit 901 according to the fourth variation allows a server apparatus 110 to determine a destination of a mobile battery 100 that is not set destination in advance and automatically self-propelling in an automatic self-propelled mode among a plurality of mobile batteries 100. The automatic self-propelled mode is an example of a predetermined mode. The determination unit 901 may determine the destination based on the first management data and the second management data, or may determine the destination based on the first management data, the second management data, and the third management data.

According to the fourth variation, for example, the mobile battery 100 moving on a predetermined course may continue to move on the course and charge to a predetermined storage battery 120 or the like. On the other hand, for a mobile battery 100 that is self-propelling automatically in the automatic self-propelled mode, the server apparatus 110 can determine the destination.

### <Fifth variation>

Next, a fifth variation will be described. In the fifth variation, same parts as in the third embodiment, the first variation, the second variation, the third variation and the fourth variation are omitted.

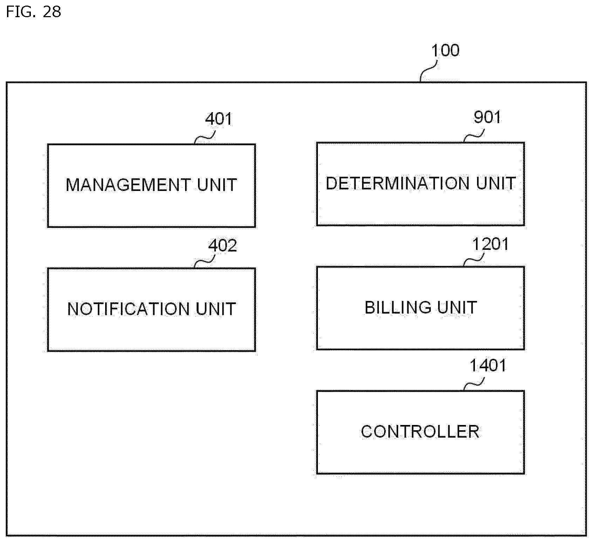

FIG. 28 is a diagram showing an example of a functional configuration of a mobile battery 100 according to the fifth variation. The functional configuration of the mobile battery 100 according to the fifth variation further includes a controller 1401 compared to the functional configuration of the mobile battery 100 according to the fourth variation. The controller 1401 controls each of the plurality of mobile batteries 100 that are self-propelling in the automatic self-propelled mode to move to a destination determined by the determination unit 901. For example, the controller 1401 transmits information on the destination determined by the determination unit 901 to the mobile battery 100 and controls the mobile battery 100 in such a manner that the mobile battery 100 moves to the destination.

According to the fifth variation, the server apparatus 110 can determine the destination of each of the plurality of mobile batteries 100 that are self-propelled in a predetermined mode, and control each of the plurality of mobile batteries 100 to move to the determined destination.

### <Sixth variation>

Next, a sixth variation will be described. In the sixth variation, same parts as in the third embodiment, the first variation, the second variation, the third variation, the fourth variation, and the fifth variation are omitted.

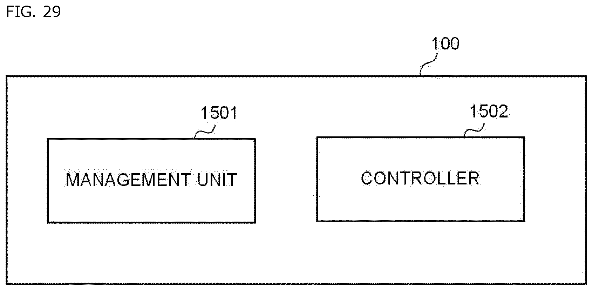

FIG. 29 is a diagram showing an example of a functional configuration of a mobile battery 100 according to the sixth variation. The mobile battery 100 according to the sixth variation includes, as a functional configuration, a management unit 1501 and a controller 1502.

In the sixth variation, the server apparatus 110 controls all destinations or the like of the plurality of mobile batteries 100.

The management unit 1501 stores, in the storage unit 202, first management data in relation to a plurality of mobile batteries located in a predetermined area and self-propelled and second management data in relation to a plurality of first devices receiving charge from each of the plurality of mobile batteries, and manages the data. The first management data includes discharge information for each of the plurality of mobile batteries, charge information for each of the plurality of mobile batteries, and location information for each of the plurality of mobile batteries. The second management data includes charge information for each of the plurality of first devices and location information for each of the plurality of first devices. The first management data and the second management data are the same as the first management data and the second management data according to the third embodiment.

The controller 1502 is configured to determine a destination of each of the plurality of mobile batteries that are self-propelling in a predetermined mode based on the first management data and the second management data, and to control each of the plurality of mobile batteries that are self-propelling in the predetermined mode to move to the destination, respectively. The controller 1502 may perform optimization using an objective function to determine the destination, as shown in the embodiment described above, or may determine the destination using a learned model.

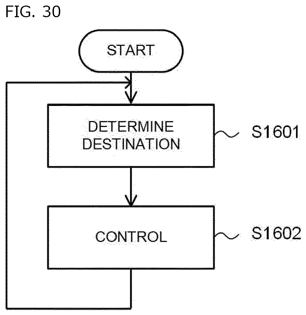

FIG. 30 is a flowchart showing an example of information processing of the mobile battery 100 according to the sixth variation. Processing in FIG. 23 and processing in FIG. 30 may be processed in parallel.

In S1601, the controller 1502 determines a destination of each of the plurality of mobile batteries that are self-propelling in the predetermined mode among the plurality of mobile batteries based on the first management data and the second management data.

In S1602, the controller 1502 controls each of the plurality of mobile batteries to move to the destination determined in S1601. After processing in S1602, the controller 1502 returns the processing to S1601.

According to the sixth variation, the server apparatus 110 can determine the destination of each of the plurality of mobile batteries 100 that are self-propelling in the predetermined mode, and control each of the plurality of mobile batteries 100 to move to the determined destination.

As another example, the controller 1502 may determine the destination of each of the plurality of mobile batteries and control each of the plurality of mobile batteries to move to the determined destination based on the first management data and the second management data. Thereby, the server apparatus 110 may determine the destination of each of all the plurality of mobile batteries 100 that are self-propelling and control each of the plurality of mobile batteries 100 to move to the determined destination.

### <Seventh variation>

Next, a seventh variation will be described. In the seventh variation, same parts as in the third embodiment, the first variation, the second variation, the third variation, the fourth variation, the fifth variation, and the sixth variation are omitted.

The management unit 1501 according to the seventh variation stores, in a storage unit 202, first management data in relation to a plurality of mobile batteries located in a predetermined area and self-propelled, second management data in relation to a plurality of first devices receiving charge from each of the plurality of mobile batteries, and third management data in relation to a plurality of power supply apparatuses 130 supplying power to any mobile battery 100 among each of the plurality of mobile batteries 100, and manages the data. The first management data includes discharge information for each of the plurality of mobile batteries, charge information for each of the plurality of mobile batteries, and location information for each of the plurality of mobile batteries. The second management data includes charge information for each of the plurality of first devices and location information for each of the plurality of first devices. The third management data includes location information for each of the plurality of power supply apparatuses 130.

The controller 1502 according to the seventh variation determines a destination of each of the plurality of mobile batteries that are self-propelling in a predetermined mode based on the first management data, the second management data, and the third management data, and controls each of the plurality of mobile batteries that are self-propelling in the predetermined mode to move to the destination, respectively. The controller 1502 may perform optimization using an objective function to determine the destination, as shown in the embodiment described above, or may determine the destination using a learned model.

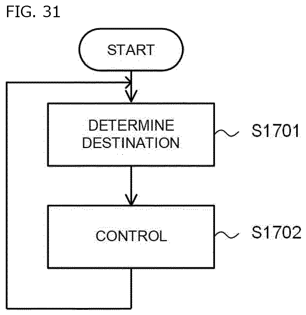

FIG. 31 is a flowchart showing an example of processing of the mobile battery 100 according to the seventh variation. Processing in FIG. 25 and processing in FIG. 31 may be processed in parallel.

In S1701, the controller 1502 determines a destination of each of the plurality of mobile batteries that are self-propelling in a predetermined mode among a plurality of mobile batteries based on the first management data, the second management data, and the third management data.

In S1702, the controller 1502 controls each of the plurality of mobile batteries to move to the destination determined in S1701. After processing in S1702, the controller 1502 returns the processing to S1701.

According to the seventh variation, the server apparatus 110 can determine the destination of each of the plurality of mobile batteries 100 that are self-propelling in the predetermined mode, and control each of the plurality of mobile batteries 100 to move to the determined destination.

As another example, the controller 1502 may determine the destination of each of the plurality of mobile batteries and control each of the plurality of mobile batteries to move to the determined destination based on the first management data, the second management data, and the third management data. Thereby, the server apparatus 110 may determine the destination of each of all the plurality of mobile batteries 100 that are self-propelling and control each of the plurality of mobile batteries 100 to move to the determined destination.

### <Eighth variation>

Hereinafter, an eighth variation will be described. In the embodiment and the variation described above, an explanation is given as if one apparatus, the server apparatus 110, perform processing. However, the processing of the server apparatus 110 can also be realized by a plurality of apparatuses, e.g., an information processing system comprising a plurality of server apparatuses executing processing based on a program stored in a storage unit of each server apparatus. Here, the plurality of apparatuses executing the processing of the server apparatus 110 may be a storage battery 120 and a power supply apparatus 130, respectively. Instead of the information processing system, a similar cloud system may be adopted as a subject to perform the processing.

According to the eighth variation, an information system comprising a plurality of server apparatuses can provide useful information to a user in an area where electric power is provided by a self-propelled mobile battery. In addition, the information system comprising the plurality of server apparatuses can determine a destination for each of the plurality of mobile batteries 100 that are self-propelling in a predetermined mode and control each of the plurality of mobile batteries 100 to move to the determined destination.

### <Ninth variation>

Next, a ninth variation will be described. In the ninth variation, same parts as in the third embodiment, the first variation, the second variation, the third variation, the fourth variation, the fifth variation, the sixth variation, the seventh variation, and the eighth variation are omitted.

In the ninth variation, function of a server apparatus 110 is assumed by any one mobile battery 100 among a plurality of mobile batteries 100, e.g., a master mobile battery. In such a configuration, a plurality of storage batteries 120 and a plurality of power supply apparatuses 130 communicate with the master mobile battery based on an IP address of the master mobile battery. The IP address is an example of address information that identifies the master mobile battery. The IP address of the master mobile battery shall be set in advance in the storage battery 120 and the power supply apparatus 130. Similarly, the mobile battery 100 other than the master mobile battery shall have the IP address of the master mobile battery set in advance.

According to the ninth variation, the master mobile battery can determine a destination of each of the plurality of mobile batteries 100 that are self-propelling in a predetermined mode and control each of the plurality of mobile batteries 100 to move to the determined destination.

### <Tenth variation>

Next, a tenth variation will be described. In the tenth variation, same parts as in the third embodiment, the first variation, the second variation, the third variation, the fourth variation, the fifth variation, the sixth variation, the seventh variation, the eighth variation, and the ninth variation are omitted.

Similar to the ninth variation, in the tenth variation, function of the server apparatus 110 is assumed by any one mobile battery 100 among the plurality of mobile batteries 100, e.g., a master mobile battery. Further, any one mobile battery 100 among the plurality of mobile batteries 100 may function as a backup mobile battery for the master mobile battery. The backup mobile battery backs up information of the master mobile battery at a predetermined period. In addition, the backup mobile battery communicates with the master mobile battery periodically, and if the remaining power of the master mobile battery falls below a predetermined value or fails and becomes incapable of moving, the backup mobile battery itself becomes a master mobile battery. The backup mobile battery that has become the master mobile battery notifies the plurality of storage batteries 120, the plurality of power supply apparatuses 130, and the other mobile batteries 100 that it will operate as the master mobile battery. The plurality of storage batteries 120, the plurality of power supply apparatuses 130, and the other mobile batteries 100 that have received the notification that the backup mobile battery operates as the master mobile battery set a destination of information to the new master mobile battery.

According to the tenth variation, the master mobile battery can determine a destination of each of the plurality of mobile batteries 100 that are self- propelling in a predetermined mode and control each of the plurality of mobile batteries 100 to move to the determined destination.

Furthermore, according to the tenth variation, even if the master mobile battery fails, etc., the backup mobile battery becomes the master mobile battery and can manage and control the plurality of mobile batteries 100.

### <Eleventh variation>

Hereinafter, an eleventh variation will be described.

A communication unit 205 according to the eleventh variation communicates with a plurality of movable mobile batteries 100. A controller 201 according to the eleventh variation associates with discharged power value, identification information for identifying a discharge destination device, power value of a mobile battery 100 after discharge, and discharge date and time information of a plurality of mobile batteries 100 that are obtained via the communication unit 205, store them in a storage unit 202 as history information, and perform management.

The history information includes location information of discharge destination. The controller 201 predicts a demand for electric power based on the history information. More specifically, the controller 201 can always grasp where and how much electric power is discharged from the mobile battery 100 based on the history information stored in the storage unit 202, etc., and can predict the demand for electric power based on the grasped information.

Further, the controller 201 predicts the demand for electric power based on the history information and determines arrangement destination of each of the plurality of mobile batteries 100 based on the predicted demand of electric power. More specifically, the controller 201 can control the mobile battery 100 to be placed in advance in a parking lot or the like near a device that is expected to be discharged, based on the predicted demand of electric power. In addition, the controller 201 associates with the discharged power value, the identification information for identifying a discharge destination device, the power value of a mobile battery 100 after discharge, and the discharge date and time information of the plurality of mobile batteries 100 that are obtained via the communication unit 205, store them in the storage unit 202 as history information, and perform management.

The history information also includes environmental information in relation to the discharge destination device. An example of the environmental information may be temperature information, humidity information, or the like. An example of the discharge destination device may be a storage battery 120. Here, if the discharge destination device fails, the controller 201 determines a cause of failure of the discharge destination device based on the environmental information and presents to a user. Method of presentation may be by sending an e-mail, displaying a screen on a dedicated website for the user, or sending a message to a SNS account of the user. In other words, any method is acceptable as long as the cause of the failure can be notified to the user. Further, the controller 201 determines and presents a maintenance timing of the discharge destination device based on the environmental information.

The history information also includes environmental information in relation to a charging source device. An example of the charging source device is a power supply apparatus 130. For instance, if the charging source device fails, the controller 201 determines and presents a cause of failure of the charging source device based on the environmental information. The controller 201 also determines and presents a maintenance timing of the charging source device based on the environmental information.

### 4. Others

Each of the above-described embodiments may also be implemented by following manners.
(1) One moving unit 2 may be provided. In this case, an overturn prevention mechanism (not shown) is preferably provided to prevent the mobile battery 100 from overturning. When there is only one moving unit 2, it is possible to realize a mobile battery 100 that can turn around in a small radius.
(2) Five or more moving units 2 may be provided. This is particularly effective when the mobile battery 100 is large.
(3) A solar panel may be mounted on a top surface of the mobile battery 100. This allows electric power to be charged to the battery body 1 via the solar panel during daytime on a sunny day.
(4) Control of the mobile battery 100, such as forward, backward, acceleration, deceleration, or stopping, may be realized only by a telecommunication line inside the battery body 1 and the controller 10 (so-called by-wire system). In other words, the mobile battery 100 comprises a sensor 6 capable of detecting an amount of operation of the handle 7, an amount of operation of the acceleration unit 8a, an amount of operation of the deceleration unit 8b, and a position of the shift unit 9, and allow the controller 10 to execute control according to a result of the detection. According to such a configuration, it is possible to realize a battery body 1 with a larger electric capacity even with the same external shape, since the space that is originally occupied inside the battery body 1 by the parts of the mechanism system can be eliminated.
(5) An inverter 4 for controlling the motor 3 may also be adopted when supplying power from the mobile battery 100 to an external device.
(6) When the mobile battery 100 moving, the mobile battery 100 may externally supply power to an external device while the external device is placed on top of the mobile battery 100.
(7) A movable external device may be moved to follow the mobile battery 100 in such a manner that external power can be supplied from the mobile battery 100 to the external device.

In addition, for example, the server apparatus 110 may, based on the first management data, perform prediction of demand of electric power of each of the plurality of storage batteries 120. Then, the server apparatus 110 may arrange each of the plurality of mobile batteries 100 in an appropriate location based on the prediction of demand. For instance, if the demand for the storage battery 120 arranged at a certain location on a certain day is greater than a predetermined value, the server apparatus 110 may control the plurality of mobile batteries 100 to arrange the plurality of mobile batteries 100 in a parking lot or the like near the storage battery 120 in advance. Further, when the mobile battery 100 supplies power to the storage battery 120, the server apparatus 110 may acquire and manage environmental information at the time of power supply. The environmental information may include, for example, temperature, humidity, wind velocity, or the like. Similarly, the server apparatus 110 may acquire and manage the environmental information at the time of power supply when the mobile battery 100 is supplied with power from the power supply apparatus 130. The mobile battery 100 may acquire the environmental information and transmit to the server apparatus 110, and the storage battery 120 and the power supply apparatus 130 may acquire the environmental information and transmit to the server apparatus 110. The server apparatus 110 may determine maintenance timing, replacement timing, etc. of the mobile battery 100, the storage battery 120, the power supply apparatus 130, etc. based on the environmental information or the like, and notify a predetermined notification destination.

### <Appendices>

For instance, the present invention may be provided in each of the following aspects.

### (Appendix 1)

A mobile battery, comprising:
a battery body configured to be chargeable, dischargeable, or replaceable;
a moving unit connected to a motor and configured to move the battery body; and
the motor configured to generate power by electric power supplied from the battery body; wherein
the mobile battery is configured to be self-propelled by the power or to move using the power as auxiliary power for transportation.

### (Appendix 2)

The mobile battery according to Appendix 1, wherein:
a housing space for housing a person is not formed in an inside of the battery body.

### (Appendix 3)

The mobile battery according to Appendix 1 or 2, further comprising:
a controller configured to restrict power supply from the battery body to the motor when a predetermined condition is not fulfilled.

### (Appendix 4)

The mobile battery according to Appendix 3, further comprising:
a detection unit configured to detect movement of the battery body in a state in which power supply from the battery body to the motor is restricted, and
a notification unit configured to notify that the battery body is moved in the state in which power supply from the battery body to the motor is restricted when a movement of the battery body is detected by the detection unit.

### (Appendix 5)

The mobile battery according to Appendix 1 or 2, further comprising:
a controller configured to permit power supply from the battery body to the motor when a predetermined conditions is fulfilled.

### (Appendix 6)

The mobile battery according to Appendix 5, further comprising:
an authentication unit configured to execute an authentication process for permitting power supply from the battery body to the motor, wherein
the controller is configured to permit power supply from the battery body to the motor when the authentication process is executed by the authentication unit.

### (Appendix 7)

The mobile battery according to Appendix 1 or 2, wherein:
the mobile battery is configured of a by-wire system.

### (Appendix 8)

The mobile battery according to Appendix 1 or 2, wherein:
the mobile battery is configured to include four wheels as the moving unit.

### (Appendix 9)

The mobile battery according to Appendix 1 or 2, wherein:
the moving unit is an in-wheel motor system, and
the in-wheel motor system is configured to include a wheel and the motor included inside the wheel.

### (Appendix 10)

An information processing apparatus, comprising:
a management unit configured to manage first management data in relation to a plurality of mobile batteries located in a predetermined area and self-propelled; wherein
each of the plurality of mobile batteries is the mobile battery according to Appendix 1, and
the first management data includes discharge information for each of the plurality of mobile batteries, charge information for each of the plurality of mobile batteries, and location information for each of the plurality of mobile batteries.

### (Appendix 11)

The information processing apparatus according to Appendix 10, further comprising:
a notification unit configured to notify a user of each of the plurality of mobile batteries of recommendation information based on the first management data.

### (Appendix 12)

The information processing apparatus according to Appendix 11, further comprising:
a determination unit, wherein
the management unit is configured to manage second management data in relation to a plurality of first devices that receive power supply from any mobile battery of the plurality of mobile batteries,
the second management data includes charge information for each of the plurality of first devices and location information for each of the plurality of first devices,
the determination unit is configured to determine a destination of each of the plurality of mobile batteries based on the first management data and the second management data, and
the recommendation information includes information for the destination.

### (Appendix 13)

The information processing apparatus according to Appendix 12, wherein:
the management unit is configured to manage third management data in relation to a plurality of second devices that supply power to any mobile battery of each of the plurality of mobile batteries,
the third management data includes location information for each of the plurality of second devices, and
the determination unit is configured to determine a destination of each of the plurality of mobile batteries based on the first management data, the second management data, and the third management data.

### (Appendix 14)

The information processing apparatus according to any one of Appendices 11 to 13, further comprising:
a billing unit configured to perform a billing process based on the first management data.

### (Appendix 15)

The information processing apparatus according to Appendix 14, wherein:
the recommendation information includes a result of the billing process.

### (Appendix 16)

The information processing apparatus according to Appendix 12 or 13, wherein:
the determination unit is configured to determine a destination of each of the plurality of mobile batteries that are self-propelling in a predetermined mode among the plurality of mobile batteries.

### (Appendix 17)

The information processing apparatus according to Appendix 16, further comprising:
a controller configured to control each of the plurality of mobile batteries that are self-propelling in the predetermined mode to move to a destination determined by the determination unit.

### (Appendix 18)

The information processing apparatus according to Appendix 10, further comprising:
a controller, wherein
the management unit is configured to manage the first management data and second management data in relation to a plurality of first devices that receive charge from each of the plurality of mobile batteries,
the second management data includes charge information for each of the plurality of first devices and location information for each of the plurality of first devices, and
the controller is configured to determine a destination of each of the plurality of mobile batteries based on the first management data and the second management data, and to control each of the plurality of mobile batteries to move to respective destination.

### (Appendix 19)

An information processing system, comprising:
a management unit configured to manage first management data in relation to a plurality of mobile batteries located in a predetermined area and self-propelled; wherein
each of the plurality of mobile batteries is the mobile battery according to Appendix 1, and
the first management data includes discharge information for each of the plurality of mobile batteries, charge information for each of the plurality of mobile batteries, and location information for each of the plurality of mobile batteries.

### (Appendix 20)

An information processing method, comprising:
a management step of managing first management data in relation to a plurality of mobile batteries located in a predetermined area and self-propelled; wherein
each of the plurality of mobile batteries is the mobile battery according to Appendix 1, and
the first management data includes discharge information for each of the plurality of mobile batteries, charge information for each of the plurality of mobile batteries, and location information for each of the plurality of mobile batteries.

### (Appendix 21)

A program which allows an information processing apparatus to function as a management unit, wherein:
the management unit is configured to manage first management data in relation to a plurality of mobile batteries located in a predetermined area and self-propelled;
each of the plurality of mobile batteries is the mobile battery according to Appendix 1; and
the first management data includes discharge information for each of the plurality of mobile batteries, charge information for each of the plurality of mobile batteries, and location information for each of the plurality of mobile batteries.

### (Appendix 22)

A storage medium readable by an information processing apparatus storing a program, wherein:
the program allows the information processing apparatus to function as a management unit;
the management unit is configured to manage first management data in relation to a plurality of mobile batteries located in a predetermined area and self-propelled;
each of the plurality of mobile batteries is the mobile battery according to Appendix 1; and
the first management data includes discharge information for each of the plurality of mobile batteries, charge information for each of the plurality of mobile batteries, and location information for each of the plurality of mobile batteries.

### (Appendix 23)

A server apparatus, comprising:
a communication unit configured to communicate with a plurality of movable mobile batteries; and
a controller configured to associate with discharged power value, identification information for identifying a discharge destination device, power value of a mobile battery after discharge, and discharge date and time information of the plurality of mobile batteries that are obtained via the communication unit, store them in a storage unit as history information, and perform management.

### (Appendix 24)

The server apparatus according to Appendix 23, wherein:
the history information includes location information of discharge destination, and
the controller is configured to predict power demand based on the history information.

### (Appendix 25)

The server apparatus according to Appendix 24, wherein:
the controller is configured to predict a demand of electric power based on the history information, and arrange each of the plurality of mobile batteries based on the predicted demand of electric power in advance, and
based on the predicted demand of electric power, the controller 201 can control the mobile battery 100 to be arranged in advance near a discharge destination device.

### (Appendix 26)

The server apparatus according to Appendix 25, wherein:
the controller is configured to associate with discharged power value, identification information for identifying a discharge destination device, power value of a mobile battery after discharge, and discharge date and time information of the plurality of mobile batteries that are obtained via the communication unit, store them in the storage unit as history information, and perform management.

### (Appendix 27)

The server apparatus according to Appendix 23 or 24, wherein:
the history information also includes environmental information in relation to the discharge destination device, and
the controller is configured to determine and present a cause of failure of the discharge destination device based on the environmental information.

### (Appendix 28)

The server apparatus according to Appendix 26, wherein:
the history information also includes environmental information in relation to the charging source device, and
the controller is configured to determine and present a cause of failure of the charging source device based on the environmental information.

### (Appendix 29)

The server apparatus according to any one of Appendices 23 to 26, wherein:
the history information also includes environmental information in relation to the discharge destination device, and
the controller is configured to determine and present a maintenance timing of the discharge destination device based on the environmental information.

### (Appendix 30)

The server apparatus according to Appendix 26, wherein:
the history information also includes environmental information in relation to the charging source device, and
the controller is configured to determine and present a maintenance timing of the charging source device based on the environmental information.

The present invention may also be provided, for instance, as a non-transitory computer readable media that stores the program described above.

The above-mentioned embodiments and variations may be implemented in any combination.

According to the above-mentioned embodiments, etc., it is possible to provide useful information to a user in an area where electric power is provided by the self-propelled mobile battery 100 with a smaller amount of communication. Also, according to the above-described embodiment, etc., it is possible to control the self-propelled mobile battery 100 with a smaller amount of communication.

In addition, according to the above-described embodiment, etc., with less processing by the controller 201 of the server apparatus 110, it is possible to provide useful information to a user in an area where electric power is provided by the self-propelled mobile battery 100. Further, according to the above-described embodiments or the like, it is possible to control the self-propelled mobile battery 100 with less processing by the controller 201 of the server apparatus 110.

Finally, various embodiments of the present invention have been described, but these are presented as examples and are not intended to limit the scope of the invention. The novel embodiment can be implemented in various other forms, and various omissions, replacements, and changes can be made without departing from the abstract of the invention. The embodiment and its modifications are included in the scope and abstract of the invention and are included in the scope of the invention described in the claims and the equivalent scope thereof.

### REFERENCE SIGNS LIST

1: Battery body
1a: Power supply unit
2: Moving unit
3: Motor
4: Inverter
5: Reduction mechanism
6: Sensor
7: Handle
8a: Acceleration unit
8b: Reduction unit
9: Shift unit
10: Controller
11: Detection unit
12: Notification unit
13: Authentication unit
51: Transaxle
51a: Drive shaft
52: Power splitting mechanism
52a: Propeller shaft
53: Coupling
54: Differential mechanism
71: Support member
72: Connecting member
73: Gripping member
100: Mobile battery (battery apparatus)
110: Server apparatus
120: Storage battery
130: Power supply apparatus
150: Network
201: Controller
202: Storage unit
203: Display unit
204: Input unit
205: Communication unit
301: Controller
302: Storage unit
303: Power storage unit
304: Power supply unit
305: Charging unit
306: Display input unit
307: Communication unit
401: Management unit
402: Notification unit
501: Identification information
502: Remaining power information
503: Location information
504: Date and time information
601: Identification information
602: Discharge destination identification information
603: Discharge date and time information
604: Discharge location information
605: Discharge amount information
701: Identification information
702: Charge source identification information
703: Charge date and time information
704: Charge location information
705: Charge amount information
901: Determination unit
1000: Information processing system
1001: Identification information
1002: Remaining power information
1301: Billing unit
1401: Controller
1501: Management unit
1502: Controller
D: Depth
H: Height
W: Width

## Claims

1. A mobile battery, comprising:
a battery body configured to be chargeable, dischargeable, or replaceable;
a moving unit connected to a motor and configured to move the battery body; and
the motor configured to generate power by electric power supplied from the battery body; wherein
the mobile battery is configured to be self-propelled by the power or to move using the power as auxiliary power for transportation.

2. The mobile battery according to claim 1, wherein:
a housing space for housing a person is not formed in an inside of the battery body.

3. The mobile battery according to claim 1 or 2, further comprising:
a controller configured to restrict power supply from the battery body to the motor when a predetermined condition is not fulfilled.

4. The mobile battery according to claim 3, further comprising:
a detection unit configured to detect movement of the battery body in a state in which power supply from the battery body to the motor is restricted, and
a notification unit configured to notify that the battery body is moved in the state in which power supply from the battery body to the motor is restricted when a movement of the battery body is detected by the detection unit.

5. The mobile battery according to claim 1 or 2, further comprising:
a controller configured to permit power supply from the battery body to the motor when a predetermined conditions is fulfilled.

6. The mobile battery according to claim 5, further comprising:
an authentication unit configured to execute an authentication process for permitting power supply from the battery body to the motor, wherein
the controller is configured to permit power supply from the battery body to the motor when the authentication process is executed by the authentication unit.

7. The mobile battery according to claim 1 or 2, wherein:
the mobile battery is configured of a by-wire system.

8. The mobile battery according to claim 1 or 2, wherein:
the mobile battery is configured to include four wheels as the moving unit.

9. The mobile battery according to claim 1 or 2, wherein:
the moving unit is an in-wheel motor system, and
the in-wheel motor system is configured to include a wheel and the motor included inside the wheel.

10. An information processing apparatus, comprising:
a management unit configured to manage first management data in relation to a plurality of mobile batteries located in a predetermined area and self-propelled; wherein
each of the plurality of mobile batteries is the mobile battery according to claim 1, and
the first management data includes discharge information for each of the plurality of mobile batteries, charge information for each of the plurality of mobile batteries, and location information for each of the plurality of mobile batteries.

11. The information processing apparatus according to claim 10, further comprising:
a notification unit configured to notify a user of each of the plurality of mobile batteries of recommendation information based on the first management data.

12. The information processing apparatus according to claim 11, further comprising:
a determination unit, wherein
the management unit is configured to manage second management data in relation to a plurality of first devices that receive power supply from any mobile battery of the plurality of mobile batteries,
the second management data includes charge information for each of the plurality of first devices and location information for each of the plurality of first devices,
the determination unit is configured to determine a destination of each of the plurality of mobile batteries based on the first management data and the second management data, and
the recommendation information includes information for the destination.

13. The information processing apparatus according to claim 12, wherein:
the management unit is configured to manage third management data in relation to a plurality of second devices that supply power to any mobile battery of each of the plurality of mobile batteries,
the third management data includes location information for each of the plurality of second devices, and
the determination unit is configured to determine a destination of each of the plurality of mobile batteries based on the first management data, the second management data, and the third management data.

14. The information processing apparatus according to any one of claims 11 to 13, further comprising:
a billing unit configured to perform a billing process based on the first management data.

15. The information processing apparatus according to claim 14, wherein:
the recommendation information includes a result of the billing process.

16. The information processing apparatus according to claim 12 or 13, wherein:
the determination unit is configured to determine a destination of each of the plurality of mobile batteries that are self-propelling in a predetermined mode among the plurality of mobile batteries.

17. The information processing apparatus according to claim 16, further comprising:
a controller configured to control each of the plurality of mobile batteries that are self-propelling in the predetermined mode to move to a destination determined by the determination unit.

18. The information processing apparatus according to claim 10, further comprising:
a controller, wherein
the management unit is configured to manage the first management data and second management data in relation to a plurality of first devices that receive charge from each of the plurality of mobile batteries,
the second management data includes charge information for each of the plurality of first devices and location information for each of the plurality of first devices, and
the controller is configured to determine a destination of each of the plurality of mobile batteries based on the first management data and the second management data, and to control each of the plurality of mobile batteries to move to respective destination.

19. An information processing system, comprising:
a management unit configured to manage first management data in relation to a plurality of mobile batteries located in a predetermined area and self-propelled; wherein
each of the plurality of mobile batteries is the mobile battery according to claim 1, and
the first management data includes discharge information for each of the plurality of mobile batteries, charge information for each of the plurality of mobile batteries, and location information for each of the plurality of mobile batteries.

20. An information processing method, comprising:
a management step of managing first management data in relation to a plurality of mobile batteries located in a predetermined area and self-propelled; wherein
each of the plurality of mobile batteries is the mobile battery according to claim 1, and
the first management data includes discharge information for each of the plurality of mobile batteries, charge information for each of the plurality of mobile batteries, and location information for each of the plurality of mobile batteries.

21. A program which allows an information processing apparatus to function as a management unit, wherein:
the management unit is configured to manage first management data in relation to a plurality of mobile batteries located in a predetermined area and self-propelled;
each of the plurality of mobile batteries is the mobile battery according to claim 1; and
the first management data includes discharge information for each of the plurality of mobile batteries, charge information for each of the plurality of mobile batteries, and location information for each of the plurality of mobile batteries.

22. A storage medium readable by an information processing apparatus storing a program, wherein:
the program allows the information processing apparatus to function as a management unit;
the management unit is configured to manage first management data in relation to a plurality of mobile batteries located in a predetermined area and self-propelled;
each of the plurality of mobile batteries is the mobile battery according to claim 1; and
the first management data includes discharge information for each of the plurality of mobile batteries, charge information for each of the plurality of mobile batteries, and location information for each of the plurality of mobile batteries.
